# EUROPÄISCHE PATENTSCHRIFT

(11) **EP 2 808 069 B1**
(45) Veröffentlichungstag und Bekanntmachung des Hinweises auf die Patenterteilung: **12.10.2016**
(21) Anmeldenummer: 14164781.8
(22) Anmeldetag: 15.04.2014
(51) Int. Cl.: B01D 29/13

(54) **Filtereinrichtung, insbesondere Flüssigkeitsfilter**
Filter device, in particular fluid filter
Dispositif de filtre, en particulier filtre de liquide

(30) Priorität: 28.05.2013 DE 102013008986
(43) Veröffentlichungstag der Anmeldung: 03.12.2014
(73) Patentinhaber: MANN + HUMMEL GMBH, 71638 Ludwigsburg (DE)
(72) Erfinder: HASENFRATZ, Robert, 71334 Waiblingen (DE); WAGNER, Fabian, 71696 Möglingen (DE); RÖSGEN, André, 73630 Remshalden (DE); THALMANN, Christian, 67346 Speyer (DE); PFLÜGER, Frank, 74343 Sachsenheim (DE)

(56) Entgegenhaltungen:
- WO-A1-2012/025640
- GB-A- 580 819

## Beschreibung

### Technisches Gebiet

Die Erfindung bezieht sich auf eine Filtereinrichtung, insbesondere einen Flüssigkeitsfilter, nach dem Oberbegriff des Anspruches 1.

### Stand der Technik

In der WO 2012/025640 A1 wird eine Filtereinrichtung zur Filtration von Fluiden beschrieben, die als Gehäuse einen Filtertopf zur Aufnahme eines hohlzylindrischen Filterelementes aufweist. Der Filtertopf wird von einem Filterdeckel verschlossen, an dessen Innenseite eine Blattfeder angeordnet ist, welche im montierten Zustand eine axiale Andrückkraft auf die Stirnseite des eingesetzten Filterelementes ausübt. Zum Schließen wird der Deckel gegen die Kraft der Blattfeder axial in seine Schließposition auf dem Gehäuse aufgesetzt und anschließend nach Art eines Bajonettverschlusses um die Gehäuselängsachse verdreht, bis eine Ausnehmung in einer umlaufenden Wandung am Deckel in Eingriff mit einem radialen Vorsprung an der Wandung des Filtertopfes gelangt.

Bei der Montage ist auf einen festen, spielfreien Sitz des Filterelementes im Gehäuse zu achten.

### Offenbarung der Erfindung

Der Erfindung liegt die Aufgabe zu Grunde, mit einfachen konstruktiven Maßnahmen eine Filtereinrichtung so auszubilden, dass das Filterelement sicher im Gehäuse aufgenommen und zugleich das Gehäuse sicher zu verschließen ist.

Diese Aufgabe wird erfindungsgemäß mit den Merkmalen des Anspruches 1 gelöst. Die Unteransprüche geben zweckmäßige Weiterbildungen an. Die Aufgabe wird weiterhin gelöst durch eine Filtereinheit mit den Merkmalen des Anspruchs 11 Die Filtereinrichtung dient zur Filtration von Fluiden, insbesondere von Flüssigkeiten, gegebenenfalls auch von Gasen, und wird beispielsweise als Kraftstoff- oder Ölfilter in Kraftfahrzeugen eingesetzt. Die Filtereinrichtung weist ein topfförmiges Filtergehäuse (Filtertopf) auf, in welchem ein Aufnahmeraum zur Aufnahme eines Filterelementes gegeben ist. Das topfförmige Filtergehäuse ist von einem Filterkopf zu verschließen, der einen Deckel bildet und im montierten Zustand auf der offenen Stirnseite des Filtergehäuses aufsitzt. In der Regel ist der Filterkopf fest am Einsatzort, beispielsweise einem Kraftfahrzeug, montiert, während das Filtergehäuse mit dem Filterelement als austauschbare Filtereinheit mit dem Filterkopf verbindbar ist. Das Filtergehäuse wird über Formschlusselemente formschlüssig mit dem Filterkopf verbunden. Des Weiteren ist ein Federelement vorgesehen, welches das Filterelement axial abstützt, wobei die Abstüt-zung an einem Gehäusebauteil oder einem Filterkopfbauteil erfolgt.

Bei einer vorteilhaften Ausführung der erfindungsgemäßen Filtereinrichtung befindet sich das Federelement am Boden des topfförmigen Filtergehäuses auf der dem Filterkopf abgewandten Seite. Durch die Kraft des Federelementes wird das Filterelement axial gegen den Filterkopf gedrückt. Auf diese Weise ist das Filterelement spielfrei im Gehäuse aufgenommen, wobei auch Bauteiltoleranzen über das Federelement kompensiert werden können. In einer alternativen Ausführung befindet sich das Federelement auf der dem Filterkopf zugewandten Seite, sodass das Filterelement durch die Kraft des Federelements im Bereich des Bodens gegen das topfförmige Filtergehäuse gedrückt wird. Auch hier ist das Filterelement spielfrei im Gehäuse aufgenommen, wodurch Bauteiltoleranzen über das Federelement kompensierbar sind.

Zur Verriegelung bzw. Arretierung Filtergehäuses am Filterkopf muss das Filtergehäuse axial gegen die Kraft des Federelementes gedrückt werden, damit die axiale Verriegelungsposition am Filterkopf erreicht wird und die Formschlusselemente am Filterkopf und am Filtergehäuse ineinandergreifen können. Das Federelement hat somit zusätzlich zur kompensierenden Funktion des Spiels, mit dem das Filterelement im Gehäuse aufgenommen ist, die weitere Aufgabe, das Filtergehäuse mit einer axialen Federkraft zu beaufschlagen, die das Filtergehäuse in Richtung seiner Löseposition beaufschlagt. Das Filtergehäuse muss bei der Montage gegen die Kraft des Federelementes, die je nach Anordnung des Federelements über das Filterelement übertragen wird, axial in Richtung der Schließposition gedrückt werden.

In einer Ausführungsform ist das Federelement Platz sparend am Boden des topfförmigen Filtergehäuses auf der dem Filterkopf abgewandten Seite angeordnet. Am Filterkopf sind keine Maßnahmen für die Abstützung bzw. Halterung eines Federelementes erforderlich. Die Federkraft wird vielmehr über das Filterelement übertragen, dessen eine Stirnseite dem Federelement und dessen gegenüberliegende Stirnseite dem Filterkopf zugewandt ist. In bevorzugter Ausführung weist die Filtereinrichtung genau ein Federelement auf, das wie vorbeschrieben eine Spiel kompensierende sowie eine abstützende Funktion hat. Darüber hinaus sind keine weiteren Federelemente erforderlich. Das Federelement ist beispielsweise als eine Schraubenfeder ausgeführt, die auf Druck belastet wird und eine entsprechende Federkraft aufbaut. Es kommen aber auch anderweitige Ausführungen als Federelement in Betracht, beispielsweise Blatt- oder Tellerfedern.

In das Filterelement ist ein Mittelrohr integriert, welches die Stabilität des Filterelementes verbessert. Zweckmäßigerweise ist das Filterelement hohlzylindrisch ausgeführt und wird in Radialrichtung von dem zu reinigen Fluid durchströmt, wobei der Innenraum im Filterelement einen axialen Strömungsraum bildet. Das Filterelement kann radial von außen nach innen durchströmt werden, so dass die außen liegende Mantelfläche die Rohseite und der Innenraum die Reinseite bildet. Das Mittelrohr kleidet den Innenraum im Filterelement aus.

Die Kraft des Federelementes wird über das Mittelrohr übertragen. Das Mittelrohr stützt sich direkt oder indirekt im Bereich einer Stirnseite am Federelement ab. Bei einer Anordnung des Federelements am Boden des Filtergehäuses stützt dich das Mittelrohr weiterhin im Bereich der gegenüberliegenden Stirnseite am Filterkopf ab. Diese Ausführung hat den Vorteil, dass das Filtermittel des Filterelementes von Stütz- und Federkräften entlastet ist, die vielmehr in Achsrichtung über das Mittelrohr übertragen werden.

Gemäß einer weiteren zweckmäßigen Ausführung weist der Filterkopf eine umlaufende, zylindrische Wandung auf, die in Schließposition in das topfförmige Filtergehäuse einragt. Die zylindrische Wandung verleiht dem Filterkopf in Schließposition zusätzliche Stabilität. Die Wandung des Filterkopfes liegt in Schließposition unmittelbar an der Innenwand des topfförmigen Filtergehäuses an.

Es kommt auch eine Ausführung in Betracht, bei der die Wandung des Filterkopfes die Wandung des Filtergehäuses umschließt, also einen größeren Außendurchmesser als das Filtergehäuse aufweist.

In die Wandung des Filterkopfes ist zweckmäßigerweise ein Formschlusselement integriert, das mit einem korrespondierenden Formschlusselement in bzw. an der Wandung des Filtergehäuses zusammenwirkt. Beispielsweise weist der Filterkopf als Formschlusselement eine Ausnehmung in seiner Wandung auf, wohingegen das Formschlusselement am Filtergehäuse als radial überstehender Vorsprung ausgebildet ist, der in der Schließposition in die Ausnehmung am Filterkopf einragt. Der radial überstehende Vorsprung am Filtergehäuse befindet sich vorzugsweise an der radial innen liegenden Seite der Wandung, was mit einer Filterkopfwandung korrespondiert, die in das Filtergehäuse eingesteckt wird. Der Vorsprung an der Filtergehäusewandung kann dreieckförmig ausgebildet sein, wobei die Dreiecksspitze radial nach innen weist und die axiale Ober- und Unterseite des dreieckförmigen Vorsprunges eben ausgebildet ist. Damit ist gewährleistet, dass in der Formschlussposition, wenn der Vorsprung in die Ausnehmung am Filterkopf einragt, ein versehentliches Lösen der Formschlussverbindung zwischen Filterkopf und Filtergehäuse ausgeschlossen ist. Durch die axiale Kraft des Filterelementes und/oder des Federelements wird das Filtergehäuse axial nach außen gedrückt, hierbei kommt die unten liegende Seite des Vorsprunges am Filtergehäuse in Anlage mit der die Ausnehmung am Filterkopf begrenzenden Wandung.

Zur Montage wird der Formschluss dadurch erreicht, dass nach Art eines Bajonettverschlusses zunächst das Filtergehäuse gegen die axiale Kraft des Federelementes auf den Filterkopf aufgesetzt und anschießend um die Filterlängsachse verdreht wird, bis der Vorsprung am Filtergehäuse in die Ausnehmung am Filterkopf einragt. Zum Lösen der formschlüssigen Verbindung erfolgt entsprechend eine Bewegung in Gegenrichtung, bei der zunächst das Filtergehäuse um die Filterlängsachse verdreht wird, bis der Vorsprung in Außereingriff mit der Ausnehmung gelangt, woraufhin das Filtergehäuse axial entfernt werden kann.

Aus Gründen einer in Umfangsrichtung besser verteilten Halte- bzw. Arretierkraft kann es zweckmäßig sein, über den Umfang verteilt mehrere Formschlusselemente sowohl am Filterkopf als auch dazugehörend am Filtergehäuse vorzusehen. Beispielsweise sind über den Umfang verteilt drei Ausnehmungen am Filterkopf und drei Vorsprünge am Filtergehäuse angeordnet.

Am Filterkopf ist zweckmäßigerweise ein Stützabschnitt zur axialen Abstützung des Filterelementes vorgesehen. Der Stützabschnitt ist insbesondere mit radialem Abstand zum Außendurchmesser angeordnet, er weist somit einen kleineren Durchmesser auf als der Außendurchmesser des Filterkopfes. In der Ausführung des Filterelementes mit integriertem Mittelrohr stützt sich dieses direkt oder indirekt an dem Stützabschnitt des Filterkopfes ab. Der Stützabschnitt im Filterkopf kann mit einer Strömungsausnehmung versehen sein, welche mit dem Innenraum im Filterelement kommuniziert, so dass bei radialer Anströmung von außen das gereinigte Fluid axial über den Innenraum und die Ausnehmung im Stützabschnitt des Filterkopfes abströmen kann. Über den Stützabschnitt erfolgt vorzugsweise neben der axialen Abstützung eine axiale und/oder radiale Dichtung. Dabei überträgt der Stützabschnitt Kräfte in axialer Richtung und drückt die Dichtung gegen den Filterkopf, so dass sich ein Klemmen und eine hinreichende Dichtkraft einstellen.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht eine Filtereinheit mit einem topfförmigen Filtergehäuse und einem darin eingesetzten Filterelement, mit einem Federelement am Boden des Filtergehäuses zur Abstützung des Filterelements,
- Fig. 2: eine Filtereinrichtung mit der Filtereinheit und einem einen Deckel bildenden Filterkopf.

In den Figuren sind gleiche Bauteile mit gleichen Bezugszeichen versehen.

### Ausführungsformen der Erfindung

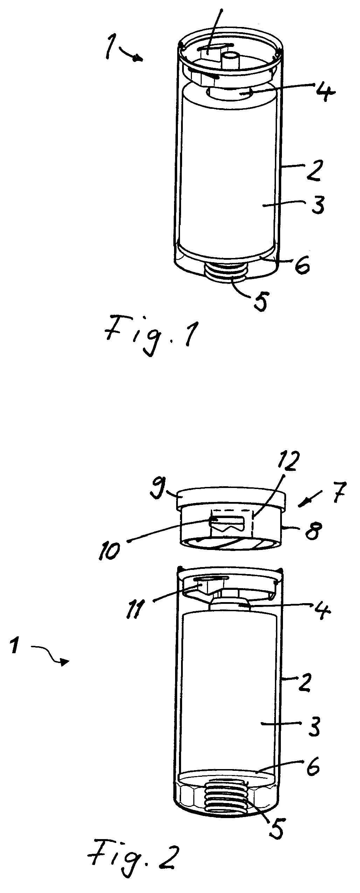

In den Figuren 1 und 2 ist eine Filtereinheit 1 bzw. eine Filtereinrichtung, umfassend die Filtereinheit 1 und einen Deckel, zur Filtration von Fluiden, insbesondere von Flüssigkeiten wie z.B. Öl oder Kraftstoff dargestellt. Die Filtereinheit 1 weist ein zylindrisches, topfförmiges Filtergehäuse 2 auf, in welchem ein Filterelement 3 aufgenommen ist, das von dem Fluid radial von außen nach innen durchströmt wird. Das Filterelement 3 ist hohlzylindrisch aufgebaut und weist ein stabilisierendes Mittelrohr 4 auf, das einen Innenraum im Filterelement 3 auskleidet, welcher die Reinseite darstellt, über den das gereinigte Fluid axial abströmt. Das Mittelrohr 4 bildet ein Stützgerüst und ist zweckmäßigerweise aus Kunststoff gefertigt. Das Mittelrohr 4 weist eine Vielzahl von Öffnungen bzw. Ausnehmungen auf, durch die das Fluid bei der Filtration radial von außen nach innen in den innenliegenden Reinraum einströmen kann.

Am Boden des topfförmigen Filtergehäuses 2 befindet sich ein Federelement 5, das als Schraubenfeder ausgebildet ist und an der Stirnseite des Filterelements 3 anliegt und dieses axial abstützt. Das Federelement 5 beaufschlagt insbesondere das Mittelrohr 4, so dass das Filtermittel des Filterelementes 3, welches um das Mittelrohr 4 gelegt ist, keine Abstützkräfte aufnehmen muss. Gegebenenfalls erfolgt die Abstützung über eine untere Endscheibe 6, welche sich an der unteren Stirnseite des Filterelementes 3 befindet.

Die offene Stirnseite des Filtergehäuses 2, die dem Boden gegenüberliegt und über die das Filterelement 3 einsetzbar bzw. zu entnehmen ist, kann von einem einen Deckel bildenden Filterkopf 7 verschlossen werden. Der Filterkopf 7 weist eine umlaufende, zylindrische Wandung 8 auf, die einen kleineren Außendurchmesser aufweist als das Filtergehäuse 2 und über die offene Stirnseite in das Filtergehäuse 2 einführbar ist. Der Filterkopf 7 weist eine Stirnscheibe 9 auf, welche einen geringfügig größeren Durchmesser als die Wandung 8 besitzt, so dass eine Ringschulter gegeben ist, mit der der Filterkopf 7 im eingesetzten, montierten Zustand an der Stirnkante der Wandung des Filtergehäuses 2 aufliegt.

In die Wandung 8 des Filterkopfes 7 sind über den Umfang verteilt mehrere Ausnehmungen 10 eingebracht, die Formschlusselemente bilden, welche mit Vorsprüngen 11 zusammenwirken, die als Formschlusselemente an der Innenseite der Wandung des Filtergehäuses 2 angeordnet sind. Im montierten Zustand ragen die Vorsprünge 11 in die Ausnehmungen 10 ein, wodurch in Achsrichtung sowie in Umfangsrichtung eine formschlüssige Verbindung zwischen dem Filterkopf 7 und dem Filtergehäuse 2 gegeben ist.

Die Vorsprünge 11 an der Innenseite der Gehäusewandung weisen Dreiecksform auf, wobei die spitze Seite des Dreiecks radial nach innen weist. Die obere und die untere Seite des dreieckförmigen Vorsprunges ist jeweils flächig ausgebildet. Zur Montage wird das Filtergehäuse 2 axial auf den Filterkopf 7 aufgesetzt, sodass ein Stützabschnitt 12, der einteilig mit dem Filterkopf 7 ausgebildet ist, in Kontakt mit einem die Stirnseite überragenden Abschnitt des Mittelrohrs 4 gelangt. Auf diese Weise wirkt die Federkraft des Federelementes 5 über das Mittelrohr 4 auch auf den Filterkopf 7. Die Axialbewegung des Filtergehäuses 2 erfolgt somit gegen die Kraft des Federelementes 5.

Nachdem das Filtergehäuse 2 seine axiale Montageposition erreicht hat, wird das Filtergehäuse 2 nach Art eines Bajonettverschlusses um die Filterlängsachse verdreht, bis die Vorsprünge 11 an der Gehäuseinnenwand in Eingriff mit den Ausnehmungen 10 in der Wandung 8 des Filterkopfes 7 gelangen. Durch die Kraft des Federelementes 5 wird das Filtergehäuse 2 in Richtung seiner Löseposition axial kraftbeaufschlagt, wodurch die untere Stirnfläche des Vorsprunges 11 in Kontakt mit der die Ausnehmung 10 in der Wandung 8 umgreifenden Wandung des Filterkopfes 7 gelangt. Ein axiales Lösen ist dadurch ausgeschlossen. Die Verbindung kann nur dadurch aufgehoben werden, dass dem Bajonettverschluss entsprechend zuerst eine Drehbewegung des Filtergehäuses 2 relativ zum Filterkopf 7 ausgeführt wird, wodurch der Vorsprung 11 in Außereingriff mit der Ausnehmung 10 gelangt, und anschließend das Filtergehäuse 2 axial entfernt wird.

Über den Umfang verteilt sind zweckmäßigerweise mehrere, beispielsweise drei Ausnehmungen 10 bzw. korrespondierende Vorsprünge 11 vorgesehen.

Das Federelement 5 hat zusätzlich zu der Funktion, eine axiale Kraft auf den Filterkopf 7 auszuführen, auch die Aufgabe eines Toleranz- bzw. Spielausgleichs für das Filterelement 3. Durch die axiale Kraftbeaufschlagung des Filterelementes 3 ist ein Axialspiel ausgeschlossen. Weiterhin ist durch die Kraftausübung auf den Filterkopf 7 die zuverlässige Dichtwirkung einer zwischen Filterelement 3 und Filterkopf 7 ausgebildeten axialen Abdichtung zwischen Reinseite und Rohseite gewährleistet.

In einer nicht dargestellten Variante der Filtereinheit 1 ist das Federelement 5 nicht am Boden des Filtergehäuses 2 angeordnet, sondern an der der Öffnung des Filtergehäuses 2 zugewandten Stirnseite des Filterelements 3. Die Montage der Filtereinheit 1 am Filterkopf 7 erfolgt auch hier gegen eine axial wirkende Kraft. Im montierten Zustand der Filtereinrichtung drückt das Federelement 5 das Filterelement 3 nicht gegen den Filterkopf 7, sondern gegen den geschlossenen Endbereich des Filtergehäuses 2. Durch die axiale Kraftbeaufschlagung des Filterelementes 3 ist ein Axialspiel ausgeschlossen.

## Patentansprüche

1. Filtereinrichtung, insbesondere Flüssigkeitsfilter, mit einem topfförmigen Filterge-häuse (2) zur Aufnahme eines Filterelements (3) und mit einem einen Deckel bildenden Filterkopf (7), welcher mit dem Filtergehäuse (2) verbindbar ist, mit einem Federelement (5) zur Abstützung des Filterelements (3), wobei der Filterkopf (7) mindestens ein Formschlusselement aufweist, dem am Filtergehäuse (2) ein korrespondierendes Formschlusselement zugeordnet ist, wobei das Federelement (5) derart angeordnet ist, dass der Filterkopf (7) und das Filtergehäuse (2) zum Erreichen einer Schließposition, in der die Formschlusselemente am Filterkopf (7) und am Filtergehäuse (2) ineinandergreifen, relativ zueinander axial gegen die Kraft des Federelements (5) zu verschieben sind und das Federelement (5) das Filterelement (3) in der Schließposition axial zwischen Filterkopf (7) und Filtergehäuse (2) verspannt, **dadurch gekennzeichnet, dass** in das Filterelement (3) ein Mittelrohr (4) integriert ist, das sich in Schließposition am Filterkopf (7) abstützt und das eine Kraft in axialer Richtung überträgt, wobei in Schließposition das Mittelrohr (4) zu dem Filterkopf (7) dichtet.

2. Filtereinrichtung nach Anspruch 1, **dadurch gekennzeichnet, dass** das Federelement (5) als Schraubenfeder ausgebildet ist.

3. Filtereinrichtung nach Anspruch 1 oder 2, **dadurch gekennzeichnet, dass** das Federelement (5) am Boden des topfförmigen Filtergehäuses (2) angeordnet ist, so dass das Federelement (5) das Filterelement (3) in der Schließposition axial gegen den Filterkopf (7) drückt.

4. Filtereinrichtung nach einem der Ansprüche 1 bis 3, **dadurch gekennzeichnet, dass** der Filterkopf (7) eine umlaufende, zylindrische Wandung (8) aufweist, die in Schließposition in das Filtergehäuse (2) einragt.

5. Filtereinrichtung nach einem der Ansprüche 1 bis 4, **dadurch gekennzeichnet, dass** der Filterkopf (7) mit einem Stützabschnitt (12) zur axialen Abstützung des Filterelements (3) versehen ist, wobei der Stützabschnitt (12) mit radialem Abstand zum Außendurchmesser angeordnet ist.

6. Filtereinrichtung nach einem der Ansprüche 1 bis 5, **dadurch gekennzeichnet, dass** das Filtergehäuse (2) bei der Schließbewegung nach Art eines Bajonettverschlusses zunächst axial und anschließend in Drehrichtung um die Filterelement-längsachse zu verstellen ist.

7. Filtereinrichtung nach einem der Ansprüche 1 bis 5, **dadurch gekennzeichnet, dass** der Filterkopf (7) als Formschlusselement eine Ausnehmung (10) in einer um-laufenden Wandung (8) aufweist, wobei das Formschlusselement am Filtergehäuse (2) als radial überstehender Vorsprung (11) ausgebildet ist, der in der Schließ-position in die Ausnehmung (10) einragt.

8. Filtereinrichtung nach Anspruch 6, **dadurch gekennzeichnet, dass** der radial überstehende Vorsprung (11) am Filtergehäuse (2) dreieckförmig ausgebildet ist.

9. Filtereinrichtung nach einem der Ansprüche 1 bis 7, **dadurch gekennzeichnet, dass** das Formschlusselement am Filtergehäuse (2) an der radial innen liegenden Seite der Filtergehäusewandung angeordnet ist.

10. Filtereinrichtung nach einem der Ansprüche 1 bis 8, **dadurch gekennzeichnet, dass** über den Umfang verteilt mehrere Formschlusselemente am Filtergehäuse (2) und am Filterkopf (7) angeordnet sind.

11. Filtereinheit mit einem Filterelement (3), mit einem topfförmigen Filtergehäuse (2) zur Aufnahme des Filterelements (3), und mit einem Federelement (5) zur Abstützung des Filterelements (3), wobei das Filtergehäuse (2) mindestens ein Formschlusselement aufweist, mittels welchem die Filtereinheit mit einem einen Deckel bildenden Filterkopf (7) verbindbar ist, wobei das Federelement (5) derart angeordnet ist, dass das Filtergehäuse (2) zum Erreichen einer Schließposition, in der das mindestens eine Formschlusselement am Filtergehäuse (2) in mindestens ein korrespondierendes Formschlusselement im Filterkopf (7) eingreift, relativ zu dem Filterkopf (7) axial gegen die Kraft des Federelements (5) zu verschieben ist, wobei das Federelement (5) dazu ausgestaltet ist, das Filterelement (3) in der Schließ-position axial zwischen Filterkopf (7) und Filtergehäuse (2) zu verspannen, **dadurch gekennzeichnet, dass** in das Filterelement (3) ein Mittelrohr (4) integriert ist, das sich in Schließposition am Filterkopf (7) abstützt und das eine Kraft in axialer Richtung überträgt, wobei in Schließposition das Mittelrohr (4) zu dem Filterkopf (7) dichtet.

## Claims

1. Filtering device, in particular liquid filter, with a pot-shaped filter housing (2) for accommodating a filter element (3) and with a filter head (7) forming a cover, the filter head being connectable with the filter housing (2), with a spring element (5) for supporting the filter element (3), wherein the filter head (7) features at least one form-fit element to which a corresponding form-fit element is allocated at the filter housing (2), wherein the spring element (5) is disposed in such a way that the filter head (7) and the filter housing (2) for reaching a closed position, in which the form-fit elements at the filter head (7) and at the filter housing (2) engage with each other, are to be axially displaced relative to each other against the force of the spring element (5) and that the spring element (5) clamps the filter element (3) in the closed position axially between filter head (7) and filter housing (2), **characterized in that** a central tube (4), that rests on the filter head (7) in closed position and transmits a force in axial direction, is integrated into the filter element (3), wherein the central tube (4) seals in closed position against the filter head (7).

2. Filtering device according to claim 1, **characterized in that** the spring element (5) is designed as coil spring.

3. Filtering device according to claim 1 or 2, **characterized in that** the spring element (5) is disposed at the bottom of the pot-shaped filter housing (2) so that the spring element (5) presses the filter element (3) in the closed position axially against the filter head (7).

4. Filtering device according to one of the claims 1 to 3, **characterized in that** the filter head (7) features a circumferential, cylindrical wall (8) which extends in closed position into the filter housing (2).

5. Filtering device according to one of the claims 1 to 4, **characterized in that** the filter head (7) is provided with a support section (12) for axially supporting the filter element (3), wherein the support section (12) is disposed with a radial distance to the external diameter.

6. Filtering device according to one of the claims 1 to 5, **characterized in that** the filter housing (2) during the closing movement is to be adjusted like a bayonet coupling at first axially and then in the direction of rotation around the longitudinal axis of the filter element.

7. Filtering device according to one of the claims 1 to 5, **characterized in that** the filter head (7) as form-fit element features a recess (10) in a circumferential wall (8), wherein the form-fit element at the filter housing (2) is designed as radially projecting protrusion (11) which extends in the closed position into the recess (10).

8. Filtering device according to claim 6, **characterized in that** the radially projecting protrusion (11) at the filter housing (2) is triangle-shaped.

9. Filtering device according to one of the claims 1 to 7, **characterized in that** the form-fit element at the filter housing (2) is disposed on the radially inner side of the filter housing wall.

10. Filtering device according to one of the claims 1 to 8, **characterized in that** a plurality of form-fit elements are disposed across the circumference at the filter housing (2) and at the filter head (7).

11. Filter assembly with a filter element (3), with a pot-shaped filter housing (2) for accommodating the filter element (3), and with a spring element (5) for supporting the filter element (3), wherein the filter housing (2) features at least one form-fit element by means of which the filter assembly is connectable with a filter head (7) forming a cover, wherein the spring element (5) is disposed in such a way that the filter housing (2) for reaching a closed position, in which the at least one form-fit element at the filter housing (2) engages with at least one corresponding form-fit element in the filter head (7), is to be axially displaced relative to the filter head (7) against the force of the spring element (5), wherein the spring element (5) is designed to clamp the filter element (3) in the closed position axially between filter head (7) and filter housing (2), **characterized in that** a central tube (4), that rests on the filter head (7) in closed position and transmits a force in axial direction, is integrated into the filter element (3), wherein the central tube (4) seals in closed position against the filter head (7).

## Revendications

1. Dispositif de filtration, en particulier filtre à liquide, avec un boîtier de filtre (2) en forme de pot destiné à réceptionner un élément filtrant (3) et avec une tête de filtre (7) formant un couvercle, la tête de filtre pouvant être reliée au boîtier de filtre (2), avec un élément élastique (5) servant d'appui à l'élément filtrant (3), la tête de filtre (7) présentant au moins un élément craboté qui est assigné à un élément craboté correspondant sur le boîtier de filtre (2), l'élément élastique (5) étant disposé de manière à ce que la tête de filtre (7) et le boîtier de filtre (2) puissent être décalés en sens axial l'un par rapport à l'autre, contre la force de l'élément élastique (5), pour atteindre une position fermée dans laquelle les éléments crabotés s'engrènent sur la tête de filtre (7) et le boîtier de filtre (2) et que l'élément élastique (5) serre l'élément filtrant (3) en position fermée en sens axial entre la tête de filtre (7) et le boîtier de filtre (2), **caractérisé en ce qu'**un tube central (4), qui s'appuie en position fermée sur la tête de filtre (7) et transmet une force en direction axiale, est intégré dans l'élément filtrant, le tube central (4) assurant, en position fermée, l'étanchéité par rapport à la tête de filtre (7).

2. Dispositif de filtration selon la revendication 1, **caractérisé en ce que** l'élément élastique (5) est exécuté sous forme de ressort hélicoïdal.

3. Dispositif de filtration selon la revendication 1 ou 2, **caractérisé en ce que** l'élément élastique (5) est disposé sur le fond du boîtier de filtre (2) en forme de pot de sorte que l'élément élastique (5) pousse l'élément filtrant (3) en position fermée en sens axial contre la tête de filtre (7).

4. Dispositif de filtration selon l'une des revendications 1 à 3, **caractérisé en ce que** la tête de filtre (7) est pourvue d'une paroi (8) circulaire et cylindrique qui, en position fermée, pénètre dans le boîtier de filtre (2).

5. Dispositif de filtration selon l'une des revendications 1 à 4, **caractérisé en ce que** la tête de filtre (7) est dotée d'une section d'appui (12) en vue de l'appui axial de l'élément filtrant (3), la section d'appui (12) étant disposée à une certaine distance radiale au diamètre extérieur.

6. Dispositif de filtration selon l'une des revendications 1 à 5, **caractérisé en ce que**, lors du mouvement de fermeture, le boîtier de filtre (2) peut être ajusté tout d'abord en sens axial, comme une fermeture à baïonnette, puis dans le sens de rotation autour de l'axe longitudinal de l'élément filtrant.

7. Dispositif de filtration selon l'une des revendications 1 à 5, **caractérisé en ce que** la tête de filtre (7), en tant qu'élément craboté, présente un évidement (10) dans une paroi (8) circulaire, l'élément craboté étant exécuté sur le boîtier de filtre (2) en tant que saillie (11) radiale qui pénètre, en position fermée, dans l'évidement (10).

8. Dispositif de filtration selon la revendication 6, **caractérisé en ce que** la saillie (11) radiale est exécutée en forme de triangle sur le boîtier de filtre (2).

9. Dispositif de filtration selon l'une des revendications 1 à 7, **caractérisé en ce que** l'élément craboté sur le boîtier de filtre (2) est disposé sur la face radialement intérieure de la paroi du boîtier de filtre.

10. Dispositif de filtration selon l'une des revendications 1 à 8, **caractérisé en ce que** plusieurs éléments crabotés sont répartis sur le pourtour du boîtier de filtre (2) et de la tête de filtre (7).

11. Unité filtrante avec un élément filtrant (3), avec un boîtier de filtre (2) en forme de pot destiné à réceptionner l'élément filtrant (3) et avec un élément élastique (5) servant d'appui à l'élément filtrant (3), le boîtier de filtre (2) présentant au moins un élément craboté avec lequel l'unité filtrante peut être reliée à une tête de filtre (7) formant un couvercle, l'élément élastique (5) étant disposé de manière à ce que le boîtier de filtre (2) puisse être décalé en sens axial, par rapport à la tête de filtre (7), contre la force de l'élément élastique (5), pour atteindre une position fermée dans laquelle l'élément craboté, au moins au nombre d'un, s'engrène, sur le boîtier de filtre (2), dans au moins un élément craboté correspondant dans la tête de filtre (7), l'élément élastique (5) étant exécuté de manière à serrer l'élément filtrant (3) en position fermée en sens axial entre la tête de filtre (7) et le boîtier de filtre (2), **caractérisé en ce qu'**un tube central (4), qui s'appuie en position fermée sur la tête de filtre (7) et transmet une force en direction axiale, est intégré dans l'élément filtrant, le tube central (4) assurant, en position fermée, l'étanchéité par rapport à la tête de filtre (7).
